(19) Europäisches Patentamt
European Patent Office
Office européen des brevets

(11) Veröffentlichungsnummer: **0 133 451**
**B1**

(12) # EUROPÄISCHE PATENTSCHRIFT

(45) Veröffentlichungstag der Patentschrift: **15.10.86**

(51) Int. Cl.⁴: **C 08 G 6/02**, C 09 D 3/62

(21) Anmeldenummer: **84105239.2**

(22) Anmeldetag: **09.05.84**

(54) **Kondensationsharze auf Basis von Alkylarylketonen und Formaldehyd.**

(30) Priorität: **06.07.83 DE 3324287**

(43) Veröffentlichungstag der Anmeldung: **27.02.85 Patentblatt 85/9**

(45) Bekanntmachung des Hinweises auf die Patenterteilung: **15.10.86 Patentblatt 86/42**

(84) Benannte Vertragsstaaten: **AT BE CH DE FR GB IT LI NL SE**

(56) Entgegenhaltungen:
**EP-A-0 007 106**
**DE-C-826 974**
**DE-C-870 022**
**DE-C-892 975**

(73) Patentinhaber: **HÜLS AKTIENGESELLSCHAFT, Patentabteilung / PB 15 - Postfach 13 20, D-4370 Marl 1 (DE)**

(72) Erfinder: **Dörffel, Jörg, Dr., Bitterfelder Strasse 4, D-4370 Marl (DE)**

**EP 0 133 451 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Gegenstand der Erfindung sind Kondensationsharze, die durch Polykondensation von Alkylarylketonen und Formaldehyd in flüssiger Phase in Gegenwart von basischen Katalysatoren bei erhöhter Temperatur erhalten werden.

Alkylarylketon/Formaldehyd-Harze sind bereits seit langem bekannt (DE—PS 892 975). Für diese Harze werden im Stand der Technik maximale Erweichungspunkte von höchstens 80°C beschrieben. Die angeführten Werte werden auch nur dann erreicht, wenn niedermolekulare Alkohole der Polykondensationsmischung zugeführt werden. Andererseits hat der Zusatz der Alkohole den Nachteil, daß der Anteil an eingebautem Alkylarylketon in dem Harz deutlich zurückgeht.—Darüber hinaus haben neuere Messungen der Erweichungspunkte (Schmelzpunkt/Kapillar-Methode) aus dem Stand der Technik nachgearbeiteter Harze ergeben, daß die tatsächlich erreichbaren Erweichungspunkte 5 bis 10°C unterhalb der angegebenen Maximalwerte liegen.

In neuerer Zeit wurde ein Verfahren zur Herstellung von Ketonharzen mit verbessertem (erhöhtem) Erweichungspunkt beschrieben (EP—PS 7 106). Das Verfahren ist jedoch nur auf (cyclo)aliphatische Ketonharze beschränkt. Diese Verbesserung wird durch Zugabe von Phasentransferkatalysatoren zu der Polykondensationsmischung erreicht. Typisch für diese Katalysatoren ist, daß sie für den Fall des praktischen Einsatzes einen Kronenether oder Substituenten it einer sehr langen Alkylkette, die gegebenenfalls noch funktionelle Gruppen enthalten muß, aufweisen müssen. Der Einsatz von Ketonen mit aromatischen Resten wird nicht beschrieben, obgleich daraus hergestellte Harze zumindest ebenso gute anwendungstechnische Eigenschaften besitzen. Diese ungewöhnliche Tatsache erklärt sich dadurch, daß—wie eigene Untersuchungen gezeigt haben—Ketone mit aromatischen Resten unter sonst gleichen Synthesebedingungen nach Zusatz des in den Beispielen der EP—PS 7 106 eingesetzten Ammoniumchlorids zu Harzen mit geringeren Erweichungspunkten führen.

Aufgabe der Erfindung war es, Alkylarylketon/Formaldehyd-Harze bereitzustellen, die einen höheren Erweichungspunkt als die des Standes der Technik aufweisen. Gleichzeitig sollte der Anteil an eingebautem Keton mehr als 95% betragen.

Diese Aufgabe konnte dadurch gelöst werden, daß in der Polykondensationsmischung 0,05 bis 5 Gew.-%—bezogen auf das Alkylarylketon—eines Aktivators der allgemeinen Formel (A)

$$\left[\begin{array}{c} R_2 \\ R_1{-}X{-}R_3 \\ CH_2{-}C_6H_5 \end{array}\right]^+ Y^- \qquad (A)$$

enthalten ist, wobei

X ein Stickstoff- oder Phosphoratom,

$R_1$, $R_2$, $R_3$ gleich oder verschieden sein können und einen Alkylrest mit 1 bis 3 C-Atomen in der Kohlenstoffkette und/oder einen Phenylrest

und

$Y^-$ das Anion einer (an)organischen Säure

bedeuten.

Für den Fall von quaternären Ammoniumsalzen sind Alkylreste ($R_{1-3}$) mit 1 bis 3 C-Atomen, insbesondere solche mit 1 oder 2 C-Atomen, in der Kohlenstoffkette bevorzugt. Für quaternäre Phosphoniumsalze sind für $R_{1-3}$ Alkylreste mit 1 bis 3 C-Atomen und/oder Phenylreste bevorzugt.

Als Anionen kommen solche starker (an)organischer Säuren wie z.B. $Cl^-$, $Br^-$, $J^-$ infrage.

Als Aktivatoren kommen quaternäre Ammoniumsalze wie z.B. Trimethylbenzylammoniumchlorid, Trimethylbenzylammoniumjodid, Triethylbenzylammoniumchlorid oder Triethylbenzylammoniumjodid, bzw. es kommen als quaternäre Phosphoniumsalze z.B. Triphenylbenzylphosphoniumchlorid oder Triphenylbenzylphosphoniumjodid infrage.

Der erfindungsgemäße Aktivator wird in Mengen von 0,05 bis 5, vorzugsweise von 0,1 bis 2,0, und insbesondere in Mengen von 0,25 bis 1 Gew.-%—bezogen auf das eingesetzte Alkylarylketon—in der Polykondensationsmischung eingesetzt.

Neben dem Aktivator werden stark basische Verbindungen wie Alkalihydroxide, insbesondere NaOH und/oder KOH als Katalysatoren für die Polykondensation verwendet.

Die basischen Katalysatoren werden in Mengen von >1 Mol-%, vorzugsweise >5 Mol-% und insbesondere in Mengen von >10 Mol-%—bezogen auf das Alkylarylketon—in der Reaktionsmischung eingesetzt.

Als Alkylarylketone werden z.B. Acetophenon und kernalkylierte Acetophenone—wie Methyltoloylketon oder Acetylethylbenzol; Alkylphenylketone mit 2 bis 6 C-Atomen in der Alkylkette—wie Propiophenon oder Butyrophenon; Methylnaphthylketon oder Acetyltetrahydronaphthalin—eingesetzt.

Die Alkylarylketone werden mit Formaldehyd bzw. Formaldehyd-abspaltetenden Verbindungen, wie z.B. Paraformaldehyd oder Trioxan, umgesetzt.

Das Molverhältnis von Alkylarylketon zu Formaldehyd liegt im Bereich von 0,9 bis 1,3, vorzugsweise von 0,95 bis 1,1.

Das Herstellungsverfahren als solches gehört zum Stand der Technik und kann der DE—PS 892 975 entnommen werden.

Im Vergleich zu den entsprechenden Alkylarylketon/Formaldehyd-Harzen des Standes der Technik besitzen die erfindungsgemäßen Harze bei gleichem Alkaligehalt bei der Synthese Erweichungspunkte, die um ca. 30°C erhöht sind.

Die erfindungsgemäßen Alkylarylketon/Formaldehyd-Harze können, wie beispielsweise in DE—PS 870 022 beschrieben, zu Harzen mit veränderten Löslichkeiten hydriert werden, wobei dann ebenfalls Harze resultieren, die im Vergleich zu den entsprechenden bisher bekannten Produkten um 10 bis 40°C höhere Erweichungspunkte aufweisen.

Die erfindungsgemäßen Harze eignen sich ausgezeichnet als Additive für Überzugsmittel; gleichzeitig können sie bei der Herstellung von Kugelschreiberpasten, Durchfarben, Tinten, Polituren o. ä. eingesetzt werden.

Die Erweichungspunkte wurden nach der Schmelzpunkt/Kapillar-Methode (Aufheizgeschwindigkeit 1°C/min) bestimmt. Als Erweichungspunkt gilt die Temperatur, bei der die pulverförmige Probe zusammensintert und transparent wird. Es ist anzumerken, daß die so erhaltenen Werte um ca. 5°C bis 10°C tiefer liegen, als wenn sie nach DIN 53 180 bzw. nach Krämer/Sarnow/Nagel ermittelt worden wären (vgl. Karsten, Lackrohstofftabelle, 7. Aufl. (1981)—Seite 50).

Die mit Buchstaben gekennzeichneten Versuche sind nicht erfindungsgemäß.

Beispiele

Herstellung des Alkylarylketon-Harzes

In einem Rührkolben werden 600 g Acetophenon, 170 ml Methanol als Lösevermittler, 180 g einer wäßrigen 30 Gew.-%igen Formaldehyd-Lösung und der Aktivator vorgelegt. Das Gemisch wird unter Rühren auf 50°C erwärmt. Anschließend gibt man innerhalb von 25 bis 30 min tropfenweise unter weiterem Rühren eine wäßrige 50 Gew.-%ige NaOH-Lösung hinzu, wobei sich das Reaktionsgemisch auf eine Rückflußtemperatur von 84°C erwärmt. Daraufhin werden weitere 298 ml der wäßrigen Formaldehyd-Lösung innerhalb von 1,5 h hinzugetropft und der Ansatz wird zwei weitere Stunden unter Rückfluß gehalten. Nach dem Erkalten wird die über dem Harz stehende wäßrige Phase abgetrennt, der Rest in Methylenchlorid aufgenommen und so lange mit vollentsalztem Wasser gewaschen, bis eine aufgearbeitete Probe zu einem trübungsfreien Harz führt. Anschließend wird das überschüssige Lösemittel—zum Schluß bei einem Vakuum von 4 mbar und einer maximalen Temperatur von 160°C—abgezogen.

Versuche 1 bis 6 bzw. A bis D

Entsprechend dem oben beschriebenen Herstellungsverfahren werden verschiedene Harze hergestellt. Die spezifischen Parameter der Harze werden in der Tabelle genannt. Die Eigenschaften der Produkte können gleichfalls der Tabelle entnommen werden.

Die Molmasse ist dampfdruckosmometrisch in Chlorbenzol bestimmt worden.

TABELLE

| Versuch | NaOH (Mol/Mol Acetophenon) | Aktivator[4] | (Mol/Mol Acetophenon) | Acetophenon-umsatz [%] | Mol-masse | Erweichungs-punkt [°C] |
|---|---|---|---|---|---|---|
| 1 | 0,25 | TMBAC | 1 | >96 | 1060 | 98 |
| 2 | 0,25 | TMBAC | 0,5 | >95 | 1100 | 94 |
| 3 | 0,25 | TEBAC | 0,5 | >96 | 1210 | 98 |
| 4 | 0,025 | TEBAC | 1,0 | >96 | 1030 | 87 |
| 5[1] | 0,25 | TEBAC | 0,25 | >96 | 1060 | 100 |
| 6 | 0,25 | BTPPC | 0,5 | >96 | 830 | 80 |
| A[2] | 0,25 | — | — | >96 | 650 | 65 |
| B[2][3] | 0,25 | — | — | 89 | 760 | 81 |
| C[2] | 0,25 | TCMAC | 1,2 | >96 | 440 | 56 |
| D[2] | 0,25 | TCMAC | 5,0 | >95 | 450 | 56 |

Erläuterungen zur Tabelle auf Seite 9

Erläuterungen zur Tabelle

[1] Es wurde KOH als Base verwendet.
[2] Das NaOH wurde nur mit vollentsalztem Wasser ausgewachsen (ohne Methylenchlorid).
[3] Die Reaktionsmischung enthielt Isopropanol anstelle von Methanol als Lösevermittler.
[4] TMBAC: Trimethylbenzylammoniumchlorid.
TEBAC: Triethylbenzylammoniumchlorid.
BTPPC: Benzyltriphenylphosphoniumchlorid.
TCMAC: Tricaprylmethylammoniumchlorid.

Versuch 7

165 g des gemäß Versuch 1 hergestellten Harzes werden in 385 g i-Butanol gelöst, in einen 1 l-Hubautoklaven übergeführt, in dem sich 50 g eines technischen, mit Chrom aktivierten Kupferkontaktes befinden. Es wird bei einer Temperatur von 135°C und einem Druck von 300 bar bis zur Beendigung der Wasserstoffaufnahme hydriert. Nach Abfiltrieren des Kontaktes und Abdestillieren des i-Butanols wird ein ethanollösliches, wasserklares, helles Harz mit einem Erweichungspunkt von 136°C erhalten.

Versuch E

Analog Versuch 7 wird das in Versuch A hergestellte Produkt hydriert. Das erhaltene ethanollösliche Harze weist einen Erweichungspunkt von 106°C auf.

**Patentansprüche**

1. Kondensationsharz, das durch Polykondensation von Alkylarylketonen und Formaldehyd im Molverhältnis von 0,9 bis 1,3 in flüssiger Phase in Gegenwart von mehr als 1 Mol-%—bezogen auf das Alkylarylketon—eines basischen Katalysators bei erhöhter Temperatur erhalten wird, dadurch gekennzeichnet, daß in der Polykondensationsmischung 0,05 bis 5 Gew.-%—bezogen auf das Alkylarylketon—eines Aktivators der allgemeinen Formel (A)

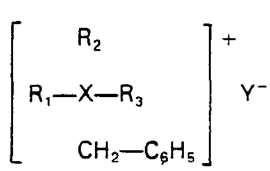

(A)

enthalten ist, wobei

X ein Stickstoff- oder Phosphoratom,

$R_1$, $R_2$, $R_3$ gleich oder verschieden sein können und einen Alkylrest mit 1 bis 3 C-Atomen in der Kohlenstoffkette und/oder einen Phenylrest und

$Y^-$ das Anion einer (an)organischen Säure

bedeuten.

2. Kondensationsharz gemäß Anspruch 1, dadurch gekennzeichnet, daß in der Polykondensationsmischung 0,05 bis 5 Gew.-%—bezogen auf das Alkylarylketon—eines Aktivators der allgemeinen Formel ($A_1$)

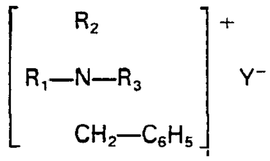

($A_1$)

enthalten ist, wobei

$R_1$, $R_2$, $R_3$ gleich oder verschieden sein können und einen Alkylrest mit 1 bis 3 C-Atomen in der Kohlenstoffkette und

$Y^-$ das Anion einer (an)organischen Säure

bedeuten.

3. Kondensationsharz gemäß Anspruch 1, dadurch gekennzeichnet, daß in der Polykondensationsmischung 0,05 bis 5 Gew.-%—bezogen auf das Alkylarylketon—eines Aktivators der allgemeinen Formel ($A_2$)

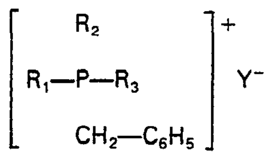

($A_2$)

enthalten ist, wobei

$R_1$, $R_2$, $R_3$ gleich oder verschieden sein können und einen Alkylrest mit 1 bis 3 C-Atomen in der Kohlenstoffkette und/oder einen Phenylrest und

$Y^-$ das Anion einer (an)organischen Säure

bedeuten.

4. Kondensationsharz gemäß den Ansprüchen 1 bis 3, dadurch gekennzeichnet, daß der Aktivator der allgemeinen Formel (A) zu 0,1 bis 2 Gew.-%—bezogen auf das Alkylarylketon—in der Reaktionsmischung enthalten ist.

5. Kondensationsharz gemäß den Ansprüchen 1 bis 3, dadurch gekennzeichnet, daß der Aktivator der allgemeinen Formel (A) zu 0,25 bis 1 Gew.-%—bezogen auf das Alkylarylketon—in der Reaktionsmischung enthalten ist.

6. Kondensationsharz gemäß den Ansprüchen 1 bis 5, dadurch gekennzeichnet, daß als Aktivator Trimethylbenzylammoniumchlorid in der Reaktionsmischung eingesetzt wird.

7. Kondensationsharz gemäß den Ansprüchen 1 bis 5, dadurch gekennzeichnet, daß als Aktivator Triethylbenzylammoniumchlorid in der Reaktionsmischung eingesetzt wird.

8. Verwendung als Kondensationsharzes gemäß den Ansprüchen 1 bis 7 als Ausgangssubstanz für daraus durch Hochdruckhydrierung hergestellte hydrierte Harze.

9. Verwendung des Kondensationsharzes gemäß den Ansprüchen 1 bis 7 als Additiv in Überzugsmitteln, Druckfarben, Kugelschreiberpasten, Tinten, Polituren.

**Revendications**

1. Résine de condensation obtenue par polycondensation d'alkyl-aryl-cétones et de formaldéhyde dans un rapport molaire de 0,9 à 1,3, en phase liquide, en présence de plus de 1 mol%—relativement à l'alkyl-aryl-cétone—d'un catalyseur basique, à température élevée, caractérisée par le fait que le mélange de polycondensation renferme de 0,05 à 5% en poids—relativement à l'alkyl-aryl-cétone—d'un activateur de la formule générale (A)

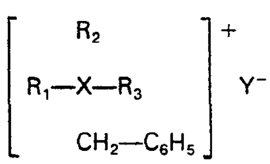

(A),

dans laquelle

X représente un atome d'azote ou un atome de phosphore,

$R_1$, $R_2$, $R_3$ peuvent être identiques ou différents et représentent un radical alkyle comportant de 1 à 3 atomes de carbone dans la chaîne carbonée et/ou représentent un radical phényle, et

$Y^-$ représente l'anion d'un acide minéral ou organique.

2. Résine de condensation selon la revendication 1, caractérisée par le fait que le mélange de polycondensation renferme de 0,05 à 5% en poids—relativement à l'alkyl-aryl-cétone—d'un activateur de la formule générale ($A_1$)

$$\left[\begin{array}{c} R_2 \\ R_1\text{—}N\text{—}R_3 \\ CH_2\text{—}C_6H_5 \end{array}\right]^+ Y^- \qquad (A_1)$$

dans laquelle

$R_1$, $R_2$, $R_3$ peuvent être identiques ou différents et représentent un radical alkyle comportant de 1 à 3 atomes de carbone dans la chaîne carbonée et/ou représentent un radical phényle, et

$Y^-$ représente l'anion d'un acide minéral ou organique.

3. Résine de condensation selon la revendication 1, caractérisée par le fait que le mélange de polycondensation renferme de 0,05 à 5% en poids—relativement à l'alkyl-aryl-cétone—d'un activateur de la formule générale ($A_2$)

$$\left[\begin{array}{c} R_2 \\ R_1\text{—}P\text{—}R_3 \\ CH_2\text{—}C_6H_5 \end{array}\right]^+ Y^- \qquad (A_2),$$

dans laquelle

$R_1$, $R_2$, $R_3$ peuvent être identiques ou différents et représentent un radical alkyle comportant de 1 à 3 atomes de carbone dans la chaîne carbonée et/ou représentent un radical phényle, et

$Y^-$ représente l'anion d'un acide minéral ou organique.

4. Résine de condensation selon les revendications 1 à 3, caractérisée par le fait que le mélange réactionnel renferme—relativement à l'alkyl-aryl-cétone—de 0,1 à 2% en poids de l'activateur de la formule générale (A).

5. Résine de condensation selon les revendications 1 à 3, caractérisée par le fait que le mélange réactionnel renferme—relativement à l'alkyl-aryl-cétone—de 0,25 à 1% en poids de l'activateur de la formule générale (A).

6. Résine de condensation selon les revendications 1 à 5, caractérisée par le fait qu'on utilise le chlorure de triméthyl-benzyl-ammonium comme activateur dans le mélange réactionnel.

7. Résine de condensation selon les revendications 1 à 5, caractérisée par le fait qu'on utilise le chlorure de triéthyl-benzyl-ammonium comme activateur dans le mélange réactionnel.

8. L'utilisation de la résine de condensation selon les revendications 1 à 7 comme substance de départ pour les résines hydrogénées préparées par hydrogénéation sous haute pression à partir de ladite substance.

9. L'utilisation de la résine de condensation selon les revendications 1 à 7 comme additif dans des agents de revêtement, des couleurs d'impression, des pâtes pour instruments d'écriture à bille, des encres, des vernis pour meubles.

**Claims**

1. A condensation resin which has been obtained by polycondensation of an alkyl aryl ketone and formaldehyde in a molar ratio of 0.9:1 to 1.3:1 in the liquid phase at elevated temperature in the presence of more than 1 mol%, based on the alkyl aryl ketone, of a basic catalyst, characterised in that 0.05 to 5% by weight, based on the alkyl aryl ketone, of an activator of the general formula (A)

$$\left[\begin{array}{c} R_2 \\ R_1\text{—}X\text{—}R_3 \\ CH_2\text{—}C_6H_5 \end{array}\right]^+ Y^- \qquad (A)$$

where

X is a nitrogen or phosphorus atom,

$R_1$, $R_2$ and $R_3$ are identical or different and each is alkyl of 1 to 3 carbon atoms in the carbon chain or phenyl, and

$Y^-$ is the anion of an (in)organic acid,
is present in the polycondensation mixture.

2. A condensation resin according to claim 1, characterised in that 0.05 to 5% by weight, based on the alkyl aryl ketone, of an activator of the general formula ($A_1$)

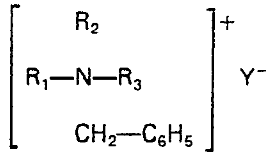

($A_1$)

where

$R_1$, $R_2$ and $R_3$ are identical or different and each is alkyl of 1 to 3 carbon atoms in the carbon chain, and
$Y^-$ is the anion of an (in)organic acid,
is present in the polycondensation mixture.

3. A condensation resin according to claim 1, characterised in that 0.05 to 5% by weight, based on the alkyl aryl ketone, of an activator or the general formula ($A_2$)

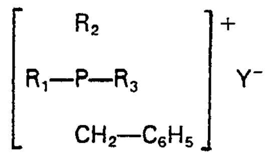

($A_2$)

where

$R_1$, $R_2$ and $R_3$ are identical or different and each is alkyl of 1 to 3 carbon atoms in the carbon chain or phenyl, and
$Y^-$ is the anion of an (in)organic acid,
is present in the polycondensation mixture.

4. A condensation resin according to any of claims 1 to 3, characterised in that the activator of the general formula (A) is present in the reaction mixture in an amount of 0.1 to 2% by weight, based on the alkyl aryl ketone.

5. A condensation resin according to any of claims 1 to 3, characterised in that the activator of the general formula (A) is present in the reaction mixture in an amount of 0.25 to 1% by weight, based on the alkyl aryl ketone.

6. A condensation resin according to any of claims 1 to 5, characterised in that trimethylbenzylammonium chloride is added to the reaction mixture as activator.

7. A condensation resin according to any of claims 1 to 5, characterised in that triethylbenzylammonium chloride is added to the reaction mixture as activator.

8. The use of a condensation resin according to any of claims 1 to 7 as starting material for the hydrogenated resin produced therefrom by high pressure hydrogenation.

9. The use of a condensation resin according to any of claims 1 to 7 as an additive in coating compositions, printing inks, ball-point pen pastes, writing inks and polishes.